# EUROPEAN PATENT SPECIFICATION

(11) **EP 1 583 184 B1**
(45) Date of publication and mention of the grant of the patent: **07.05.2008**
(21) Application number: 05007060.6
(22) Date of filing: 31.03.2005
(51) Int. Cl.: H01R 13/52, H01R 13/443

(54) **A sealing member for watertight connector and a molding method therefor**
Dichtelement für wasserdichten Verbinder und Formverfahren dafür
Joint d'étanchéité pour connecteur étanche et son procédé de moulage

(30) Priority: 02.04.2004 JP 2004109831
(43) Date of publication of application: 05.10.2005
(73) Proprietor: Sumitomo Wiring Systems, Ltd., Yokkaichi-City, Mie, 510-8503 (JP)
(72) Inventor: Kobayashi, Yutaka c/o Sumitomo Wiring Systems, Ltd., Yokkaichi-city Mie 510-8503 (JP)
(74) Representative: Müller-Boré & Partner Patentanwälte

(56) References cited:
- EP-A- 0 694 993
- US-A- 5 328 382
- US-A- 5 704 796
- US-A1- 2001 007 802

## Description

The present invention relates to a sealing member for use in a watertight connector and a molding method therefor.

For example, in a watertight connector of the type in which individual cavities are held watertight, a terminal fitting and a rubber plug are secured to an end of each wire, and the rubber plug is fitted to the entrance of a cavity to seal the cavity as the terminal fitting is accommodated into the cavity formed in a housing. On the other hand, no terminal fitting is accommodated in some of the cavities, and dummy plugs made of a rubber and separately prepared are fitted into such cavities to seal them. The dummy plug of this type has, in general, three annular lips having a wavy cross section formed on the outer circumferential surface of a plug main body in view of an inserting force into the cavity, a holding force (unwithdrawability of the cavity) and mold removal at the time of molding.

In the case of using such dummy plugs, a sealed space between a male and a female connectors may be compressed, for example, upon connecting the two connectors or an internal pressure may increase as air in the sealed space thermally expands during the use. Thus, there is a possibility that the dummy plugs come out of the cavities against the holding forces. Accordingly, auxiliary spring members for assisting such deformations of the dummy plugs as to increase their diameters have been conventionally embedded in the dummy plugs to enhance the holding forces as e.g. disclosed in Japanese Patent Publication No. 3180026.

However, in the prior art connector, the auxiliary spring members bias the dummy plugs to increase the diameters thereof although the holding forces are securely enhanced. Thus, upon inserting the dummy plug into the cavity, the projecting ends of the widened lips successively come into contact with the opening edge at the entrance of the cavity. This results in hindrance to smooth insertion and, in a worst case, the lips may be torn. Therefore, there has been an earnest demand for further improvement.

US-A-5 328 382 discloses an electrical connector according to the preamble of claim 1 with external seal and internal terminal retaining means comprising a seal sized and shaped for embracing a plug portion of a housing and being formed as a continuous and generally rectangular component.

EP-A-0 694 993 discloses a waterproof seal for connector and method for forming the same. A wire embracing portion of the seal includes a flexible tubular portion having a reduced thickness and a thickened tubular portion extending from the flexible tubular portion.

It is the object of the invention to provide a sealing member which has an improved operability so as to have a reliable sealing performance. Further, a corresponding method of forming the sealing member shall be provided.

This object is fulfilled by a sealing member having the features disclosed in claim 1 and a method of molding a sealing member having the features disclosed in claim 8. Preferred embodiments are defined in the dependent claims.

Here, a sealing force can be said to be proportional to a resiliently compressed volume of a top or radially outer part of the lip portion. However, since only one wide lip portion is formed, a resiliently compressed volume is larger as compared to conventional general sealing members formed with a plurality of lips because there is no recess between the respective lips. Accordingly, a larger sealing force can be obtained.

Further, since the single lip portion is formed and the outer surface or portion thereof is substantially planar, there is no possibility, unlike sealing members having a plurality of discrete lips, that the projecting ends of the lips successively come into contact with the opening edge of the recessed portion upon inserting the sealing member into the recessed portion. Thus, the sealing member can be smoothly inserted, thereby preventing the lip from being damaged or torn. Accordingly, overall operability is improved.

According to the invention, a side surface of the lip portion at front side with respect to an inserting direction into the recessed portion is formed into an inclined surface having a moderate inclination (less than about 30°, preferably of less than about 20°, most preferably about 15° to the longitudinal direction).

The sealing member is centered by being guided by the inclined surface, and is at least partly inserted into the recessed portion while the wide and planar outer surface of the single lip portion is substantially uniformly resiliently compressed preferably over the substantially entire circumference. After the sealing member is substantially properly inserted, the outer surface of the lip is held substantially in close contact with the inner circumferential surface of the recessed portion preferably over the substantially entire circumference, thereby effectively sealing the recessed portion.

Here, a sealing force can be said to be proportional to a resiliently compressed volume of a top part of the lip. However, since only one wide lip is formed according to the present invention, a resiliently compressed volume is larger as compared to conventional general sealing members formed with a plurality of lips because there is no recess between the respective-tips. Accordingly, a larger sealing force can be obtained.

Further, since the single lip is formed and the top surface thereof is substantially planar, there is no possibility, unlike sealing members having a plurality of lips, that the projecting ends of the lips successively come into contact with the opening edge of the recessed portion upon inserting the sealing member into the recessed portion. Thus, the sealing member can be smoothly inserted, thereby preventing the lip from being damaged or torn. Further, as described above, after being centered, the sealing member is inserted while the top surface of the lip is uniformly resiliently compressed over the entire circumference. Therefore, an inserting force can also be suppressed to be smaller.

Preferably, the sealing member is a dummy plug used to hermetically seal a cavity formed in the housing and preferably having no terminal fitting accommodated therein by being at least partly inserted into the cavity.

The dummy plug is enabled to have better unwithdrawability from the cavity, i.e. a larger holding force as well as a larger sealing force.

Further preferably, the sealing member is a waterproof resilient plug, preferably a waterproof rubber plug, used to seal an entrance side of a cavity formed in the housing by being secured to an end of a wire together with a terminal fitting and at least partly inserted into the cavity.

In the case of the waterproof rubber plug as well, a larger sealing force and a smaller inserting force can be realized.

Still further preferably, the sealing member is a packing used to provide hermetic sealing between a pair of housings connectable by the engagement of a projecting or inner part and a recessed part by being mounted on or to the outer circumferential surface of the projecting or inner part and being resiliently squeezed between the outer circumferential surface of the projecting or inner part and the inner circumferential surface of the mating recessed part.

In the case of the packing, a larger sealing force can be obtained and the connection operability of the two housings can be improved.

According to the invention, the top or outer surface of the lip has an undulated surface in which projections and recesses having height or projecting distance smaller than the height or radial extension of the lip alternately repeat substantially along longitudinal direction.

Since the top surface of the lip has the undulated surface, an area of contact between the top surface of the lip and the inner circumferential surface of the recessed portion is reduced, i.e. a frictional resistance decreases. Thus, the inserting force for the sealing member can be further reduced, so that operability is improved.

Further, upon setting parting lines in a mold for the sealing member, it is advantageous to set the parting lines at or near recesses of the outer circumferential surface of the sealing member since burrs are likely to be produced at the parting lines at any rate. By providing the undulated surface, the parting lines can be easily set using the recesses (including intermediate portions between the projections and recesses).

Here, the undulated surface forms an undercut upon removing the sealing member from a molding hole. Since the height of the undulation is low, there is no possibility of being damaged even if the sealing member is removed with the undercut formed.

Most preferably, the lip or lip portion is symmetrically formed by having side surfaces thereof at front and rear sides formed into inclined surfaces having a moderate inclination.

For example in the case of the dummy plug, regardless of whether the front or rear side of the dummy plug is inserted first into the cavity, the dummy plug can be smoothly inserted with a smaller insertion force while being guided by the inclined surface to be centered. The inserting operation can be carried out irrespective of the orientation of the dummy plug, thereby improving operability. In the case of the packing, regardless of whether the front or rear side of the packing is first mounted on the outer circumferential surface of the projecting part, the packing can be smoothly inserted into the mating recessed part while being guided by the inclined surface to be centered, i.e. the housings can be connected with a smaller force. The packing can be mounted on the projecting part similarly irrespective of the orientation of the packing and, therefore, operability is better.

According to a further preferred embodiment of the invention, the lip portion extends over more than about half, preferably over more than about 2/3 the longitudinal extension of the sealing member.

Preferably, the sealing member is substantially rotationally symmetric about its longitudinal axis.

According to the invention, there is further provided a method of molding a sealing member having the features according to claim 8.

Further, upon setting parting lines in a mold for the sealing member, by setting the parting lines at or near recesses of the outer circumferential surface of the seal ing member, burrs which are likely to be produced at the parting lines do not impair the sealing function and/or the insertability of the sealing member thus improving operability. By providing the undulated surface, the parting lines can be easily set using the recesses (including intermediate portions between the projections and recesses).

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a side view partly in section showing a state before a dummy plug according to a first embodiment of the invention is inserted into a cavity,
FIGS. 2(A) and 2(B) are a front view and a side view partly in section of the dummy plug,
FIG. 3 is a side view partly in section showing a state where the dummy plug is inserted in the cavity,
FIGS. 4(A) and 4(B) are a front view and a side view partly in section of a dummy plug according to a second embodiment of the invention,
FIG. 5 is a side view partly in section showing a state where the dummy plug is inserted in a cavity,
FIG. 6 is a side view partly in section of a waterproof rubber plug according to a third embodiment of the invention,
FIG. 7 is a side view in section showing an operation of inserting a female terminal and the waterproof rubber plug into a cavity of a female housing,
FIG. 8 is a side view in section showing an operation of inserting a male terminal and the waterproof rubber plug into a cavity of a male housing,
FIGS. 9(A) and 9(B) are a front view and a side view partly in section of a packing according to a fourth embodiment of the invention,
FIG. 10 is a side view in section showing a state before a female and a male housings are connected,
FIG. 11 is a side view in section showing a state after the connection,
FIG. 12 is a side view in section showing a state before a female and a male housings according to a fifth embodiment are connected, and
FIG. 13 is a side view in section showing a state after the connection.

Hereinafter, embodiments of the present invention are described with reference to the accompanying drawings.

### <First Embodiment>

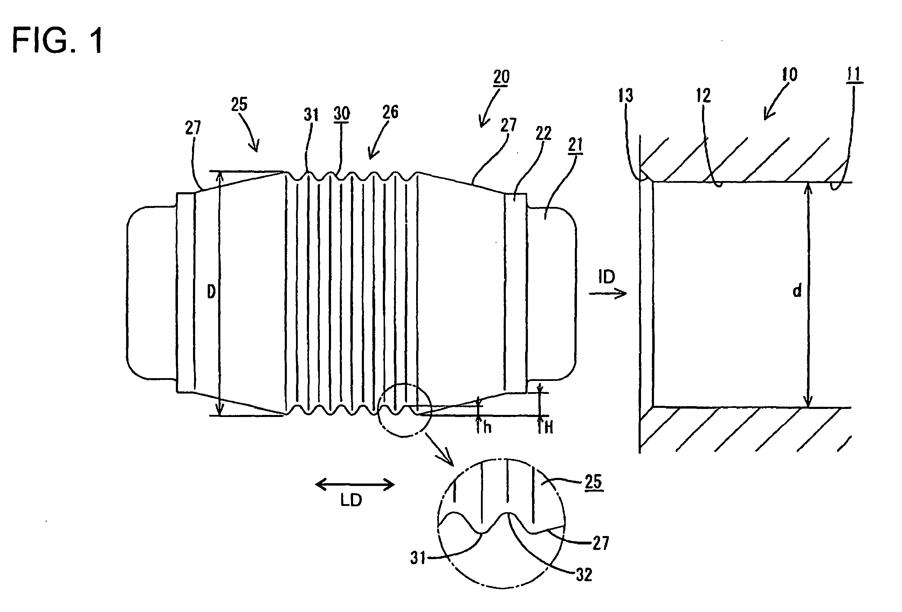

A first preferred embodiment of the present invention is described with reference to FIGS. 1 to 3. The present invention is applied to a dummy plug in this embodiment.

In FIG. 1, a connector housing 10 is formed with one or more, preferably a plurality of cavities 11 into which terminal fittings (not shown) are at least partly insertable, wherein an entrance 12 of each cavity 11 preferably has a substantially round cross section and the opening edge of the entrance 12 is beveled or diverging to form a guiding surface 13.

One or more dummy plugs 20 are or are to be at least partly inserted into the entrances 12 of the cavities 11 preferably into which the terminal fittings are not to be inserted.

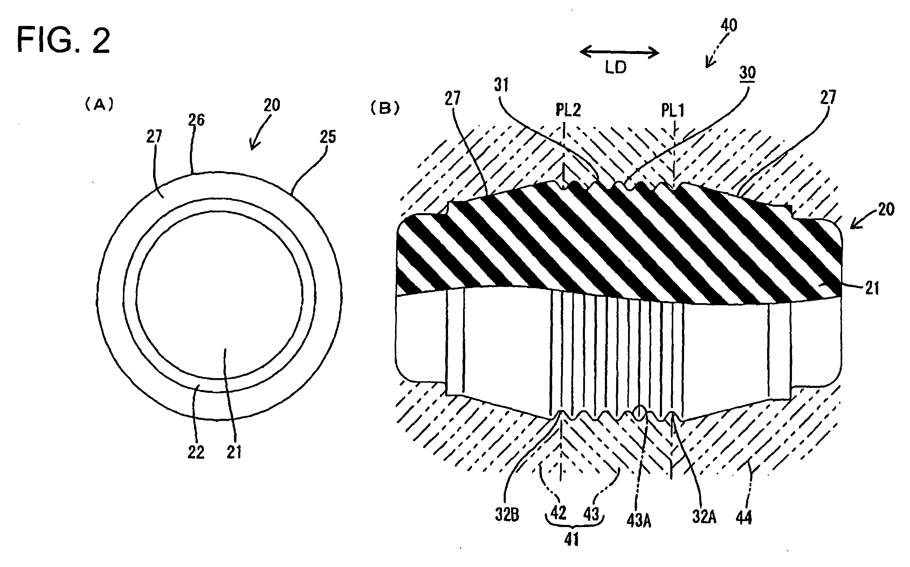

Each dummy plug 20 is made of a resilient (preferably rubber) material such as an oil-impregnated silicone and preferably formed by injection molding in a mold 40. As shown in FIG. 2, this dummy plug 20 has a single wide lip or lip portion 25 formed on the outer circumferential surface of a plug main body 21 and preferably is substantially symmetrically shaped along longitudinal direction LD. The wide lip portion 25 preferably has a longitudinal extension of more than about 1/4, preferably of more than about 1/3 of the longitudinal extension of the dummy plug 20. Moreover, the dummy plug 20 preferably is substantially rotationally symmetric about its longitudinal axis.

More specifically, the plug main body 21 is in the form of a stepped or diverging cylinder having a large-diameter portion 22 over a wide range at a longitudinal intermediate (preferably substantially middle) part.

The lip 25 preferably is a single lip as described above and formed substantially over the entire width or extension of the large-diameter portion 22. An area of a widthwise or longitudinal middle part, which area is slightly more than one third of the entire width or extension, serves as a top or outer surface 26 (as a preferred radially outermost portion) that is a planar surface in parallel with longitudinal direction LD as a whole. Inclined surfaces 27 having a moderate downward or inward inclination (preferably of less than about 30°, preferably of less than about 20°, most preferably about 15° to the longitudinal direction LD) are formed at the opposite side surface of the top surface 26.

An outer diameter D of the top surface 26 of the lip 25 is set to be larger than an inner diameter of the entrance 12 of the cavity 11 by a specified (predetermined or predeterminable) distance. The downward or inward inclination of the inclined surfaces 27 at the opposite sides is a moderate inclination of less than about 30°, preferably of less than about 20°, most preferably about 15°.

Further, a plurality of projections and recesses having a substantially triangular or pointed cross section are repeatedly formed (preferably at substantially even intervals) along widthwise direction (longitudinal direction LD) on the top or outer surface 26 of the lip 25, thereby forming an undulated or wavy surface 30. Height h of the undulation of the undulated surface 30 is set to be as low as one third of the height H of the lip 25.

The mold 40 for this dummy plug 20 is comprised of a fixed mold 41 including a fixed portion 42 and a middle or intermediate plate 43, and a movable mold 44 as schematically shown in FIG. 2(B). A first parting line PL1 between the movable mold 44 and the middle plate 43 of the fixed mold 41 is set at a position of or corresponding to a recess 32A at or towards one end of the undulated surface 30, whereas a second parting line PL2 between the fixed portion 42 and the middle plate 43 in the fixed mold 41 is set at or corresponding to a position of a recess 32B at or towards the opposite side of the undulated surface 30.

When or after the dummy plug 20 is molded in the closed mold 40, the movable mold 44 is separated forward relatively to the fixed mold 41 while the dummy plug 20 is at least partly left in a molding hole defined in the fixed mold 41 (fixed portion 42 and the middle plate 43). Subsequently, the middle plate 43 is separated forward relative to or away from the fixed portion 42 while the dummy plug 20 is held in a molding hole 43A of the middle plate 43. After the middle plate 43 is rotated in a direction substantially normal to the longitudinal direction LD or in a radial direction (i.e. normal to the plane of FIG. 2(B)) in front of the fixing portion 42, the dummy plug 20 is protruded from the molding hole 43A of the middle plate 43 by a kick-out pin or the like, thereby being taken out as a product.

The dummy plug 20 constructed as above is or can be at least partly inserted into the entrance 12 of the corresponding cavity 11 as shown by an arrow of FIG. 1. The front inclined surface 27 with respect to an inserting direction ID comes into contact with the opening edge of the entrance 12 to guide and center the dummy plug 20, and the dummy plug 20 is at least partly inserted or insertable into the cavity 11 while the top or outer surface 26 of the single lip 25 is substantially uniformly resiliently compressed preferably over the entire substantially circumference.

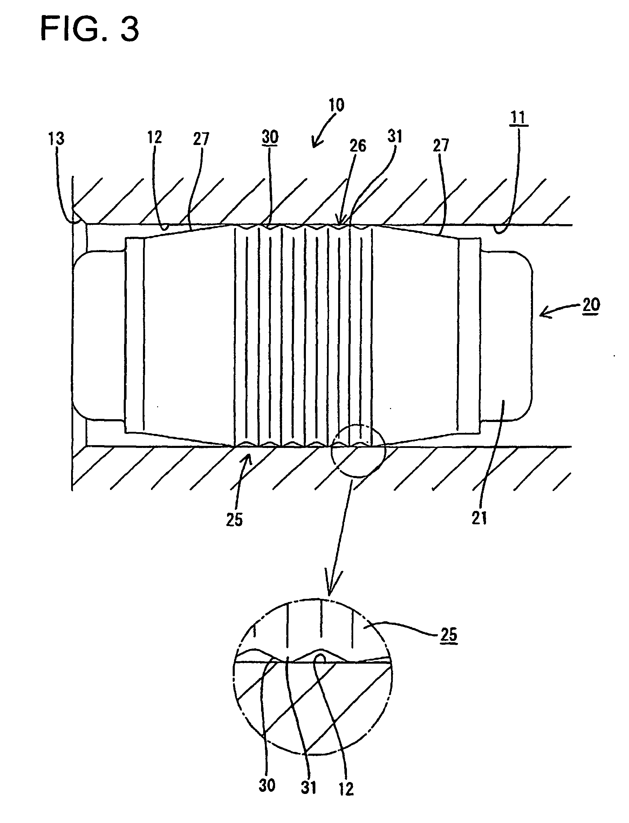

When the dummy plug 20 is property inserted into the entrance 20 of the cavity 11 as shown in FIG. 3, the top or outer surface 26 of the lip 25 comes into close contact with the inner circumferential surface of the entrance 12 of the cavity 11 preferably over the substantially entire circumference by the action of the resilient force of the lip 25, thereby sealing the cavity 11.

Here, the above sealing force and a force for preventing the dummy plug 20 from coming out of the cavity 11 when an inner pressure increases, i.e. a holding force, can be said to be proportional to a resiliently compressed volume of the top or outermost part of the lip 25. In view of this, the dummy plug 20 of this embodiment is formed with only one lip 25 having the wide top or outer surface 26, and a resiliently compressed volume of the entire top or outer part is larger than conventional general dummy plugs formed with three lips although the top or outer surface 26 has the fine undulation. As a result, a larger sealing force and a larger holding force can be obtained.

On the other hand, upon inserting the dummy plug 20 into the cavity 11, the dummy plug 20 is inserted with the top or outer surface 26 of the lip 25 substantially uniformly resiliently compressed preferably over the substantially entire circumference after being centered. Further, the fine undulated surface 30 preferably is formed in or at the top or outer surface 26 of the lip 25 to reduce a contact area between the top surface 26 of the lip 25 and the inner circumferential surface of the cavity 11, thereby decreasing a frictional resistance. Thus, an inserting force for the dummy plug 20 can be reduced to be smaller.

Further, since the fine undulated surface 30 preferably is formed in the top or outer surface 26 of the single lip 25, it can be avoided, unlike the conventional general dummy plug having three lips, that the projecting ends of the lips successively come into contact with the opening edge of the cavity 11 upon inserting the dummy plug 20 into the cavity 11. Accordingly, the dummy plug 20 can be smoothly inserted, thereby protecting the lip 25 from being damaged or torn.

Upon setting the parting lines in the mold 40 for the dummy plug 20, it is advantageous to set the parting lines at or in proximity of the recesses on the outer circumferential surface of the dummy plug 20 since burrs are likely to be produced at the parting lines at any rate. In this respect, since the top surface 26 of the lip 25 is formed with the undulated surface 30, the parting lines PL1, PL2 can be set using or corresponding to the recessed portions 32A, 32B.

The formation of the undulated surface 30 in the top surface 26 of the lip 25 results in an overhanging portion or undercut particularly in the case of thrusting the dummy plug 20 out of the molding hole 43A of the middle plate 43. However, since the height or projecting distance h of undulation 31 is low (preferably less than about 1/20 of the radius of the dummy plug), there is no possibility of being damaged.

Further, since the inclined surfaces 27 of the lip 25 preferably are substantially symmetrically formed at the front and rear sides, the dummy plug 20 can be smoothly inserted with a smaller force while being guided by the inclined surface 27 to be centered regardless of whether the front or rear side of the dummy plug 20 is first inserted into the cavity 11. Thus, the inserting operation can be carried out irrespective of the orientation of the dummy plug 20, thereby improving operability.

Accordingly, to enable a sealing member to be smoothly at least partly inserted into a recessed portion while increasing a sealing force, a dummy plug 20 is formed with only one lip 25 having a wide planar top or outer surface 26. One or more inclined surfaces 27 having a moderate downward inclination (preferably of less than about 30°, preferably of less than about 20°, most preferably about 15° to the longitudinal direction LD) are formed preferably at the opposite sides of the top or outer surface 26, and preferably an undulated surface 30 having one or more repeated projections 31 having a short height or projecting distance is at least partly formed in or on the top or outer surface 26. The dummy plug 20 preferably is substantially centered by being guided by the inclined surface 27 and is inserted into a cavity 11 while the wide top or radially outer surface 26 of the single lip 25 is substantially uniformly resiliently compressed over the entire circumference, whereupon the top surface 26 is held substantially in close contact with the inner circumferential surface of the cavity 11 by the action of a resilient force, thereby sealing the cavity 11. Since the top or outer surface 26 preferably is formed with the fine undulated surface 30, a frictional resistance decreases and an area of contact also decreases. Thus, the dummy plug 20 can be smoothly inserted into the cavity 11 with a smaller force.

### <Second Embodiment>

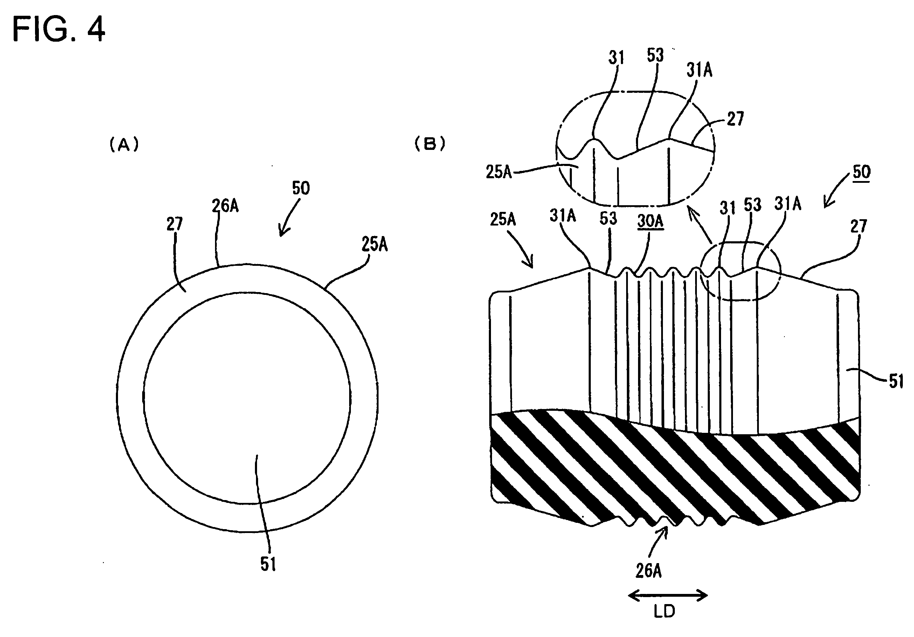

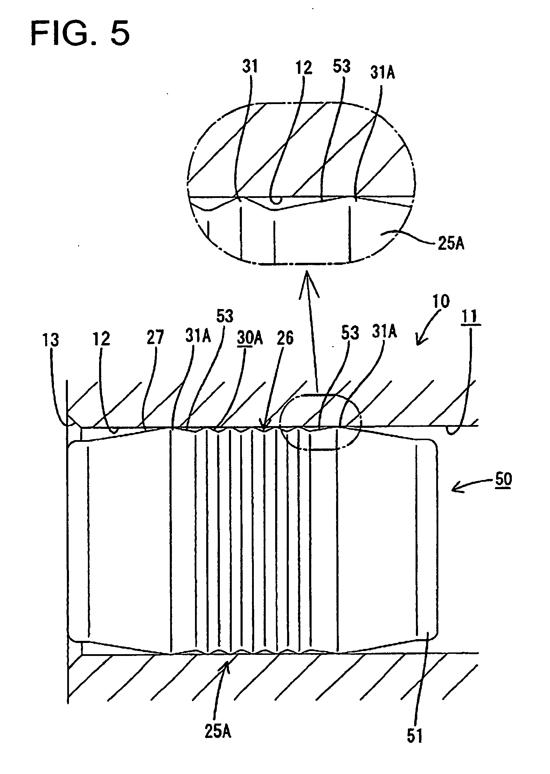

FIGS. 4 and 5 show a second preferred embodiment of the present invention. In a dummy plug 50 of this second embodiment, a plug main body 51 is in the form of a short cylinder having a large diameter so as to correspond to the large-diameter portion 22 of the plug main body 21 of the first embodiment. Although an undulated surface 30A is similarly formed in a top or outer surface 26A of a single lip or lip portion 25A, projections 31A at the opposite widthwise or longitudinal ends have longer intervals to projections 31 located at their inner sides than other projections 31. Thus, oblique or slanted surfaces 53 of the projections 31A located at the opposite ends and extending toward the inner recesses have about the same moderate downward or inward inclination (preferably of less than about 30°, preferably of less than about 20°, most preferably about 15° to the longitudinal direction LD) as inclined surfaces 27 provided at the outer sides of the top or outer surface 26A. In other words, the projections 31A at the opposite ends are moderately angled. The wide lip portion 25A preferably has a longitudinal extension of more than about 1/4, preferably of more than about 1/3 of the longitudinal extension of the dummy plug 50. Moreover, the dummy plug 50 preferably is substantially rotationally symmetric about its longitudinal axis.

The other construction is similar or same as in the first embodiment and no repetitive description is given on the elements having the similar or same functions by identifying them by the same reference numerals.

Since the projections 31A at the opposite ends are particularly formed to be moderately angled (preferably less than about 30° with respect to the longitudinal direction LD) upon forming the undulated surface 30A in the top surface 26A of the lip 25A in the dummy plug 50 having the above construction, the dummy plug 50 can be smoothly inserted with an eased contact force when the dummy plug 50 is at least partly inserted into the cavity 11 and the undulated surface 30A comes into contact with the opening edge of the entrance 12 following the inclined surface 27 of the lip 25A. In other words, the realization of a smaller inserting force was confirmed by experiments.

### <Third Embodiment>

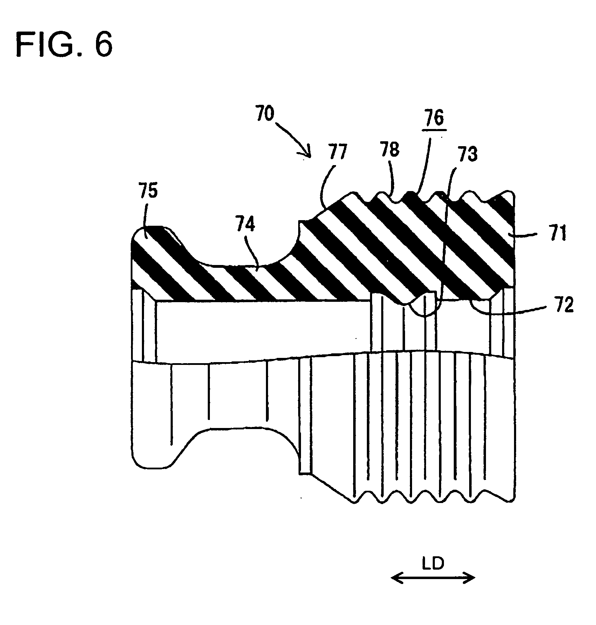

A third preferred embodiment of the present invention is shown in FIGS. 6 to 8. The present invention is applied to a waterproof resilient (preferably rubber) plug 70 in this embodiment. Moreover, the waterproof resilient plug 70 preferably is substantially rotationally symmetric about its longitudinal axis.

This waterproof resilient (preferably rubber) plug 70 is likewise made of a resilient (preferably rubber) material such as an oil-impregnated silicone. As shown in FIG. 6, a plug main body 71 is formed with a center hole 72 through which a wire W is at least partly introduced and an inner lip 73 is suitably formed on or around the center hole 72. A thinner mounting tube 74 projects from one edge of the center hole 72, and a retaining projection 75 is formed on the outer circumferential surface of a projecting end or end portion of the mounting tube 74.

Here, on the outer circumferential surface of the plug main body 71, a wide single lip or lip portion 76 is formed substantially preferably over the substantially entire width or extension, and an inclined surface 77 having a moderate downward (or radially inward) inclination is formed at an end of the lip 76 toward the mounting tube 74. The wide lip portion 76 preferably has a longitudinal extension of more than about 1/4, preferably of more than about 1/3, most preferably more than about half of the longitudinal extension of the plug main body 71. Further, an undulated surface 78 having a short height or projecting distance is formed in the top or outer surface of the lip 76.

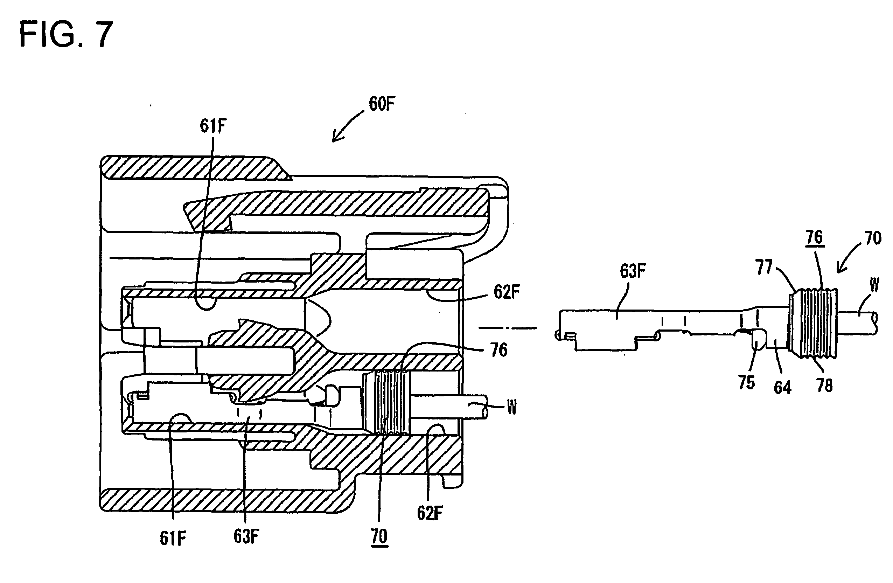

By crimping or bending or folding an insulation barrel 64 of a female terminal 63F into connection with or at least partly onto the outer circumferential surface of the mounting tube 74, for example, as shown in FIG. 7 after such a waterproof rubber plug 70 is mounted at an end of a wire W, whereby the waterproof rubber plug 70 is secured to the end of the wire W together with and behind the female terminal 63F.

When the female terminal 63F is at least partly inserted into a cavity 61F formed in a female housing 60F e.g. from behind, the waterproof rubber plug 70 is at least partly inserted into an entrance 62F of the cavity 61F at or towards a final stage of the inserting operation. The waterproof rubber plug 70 is substantially centered by being guided by the inclined surface 77 coming into contact with the opening edge of the entrance 62F, and is inserted into the entrance 62F while the top or radially outer surface of the single lip 76 is uniformly resiliently compressed preferably over the substantially entire circumference. When the female terminal 63F is inserted to a proper position, the top or outer surface of the lip 76 of the waterproof rubber plug 70 is held in close contact with the inner circumferential surface of the entrance 62F of the cavity 61F over the entire circumference by the action of a resilient force, thereby sealing the cavity 61F.

Here, a sealing force can be said to be proportional to a resiliently compressed volume of the top or outer part of the lip 76. However, since only one lip 76 having the wide top surface is formed, a resiliently compressed volume of the entire top or outer part is larger than conventional general waterproof rubber plugs formed with three lips although the top or radially outer surface is formed with the fine undulation. As a result, a larger sealing force can be obtained.

On the other hand, upon at least partly inserting the waterproof rubber plug 70 into the cavity 61F, the waterproof rubber plug 70 is inserted with the top or outer surface of the lip 76 uniformly resiliently compressed over the entire circumference after being centered. Further, the fine undulated surface 78 is formed in the top or outer surface of the lip 76 to reduce a contact area between the top surface of the lip 76 and the inner circumferential surface of the cavity 61F, thereby decreasing a frictional resistance. Thus, an inserting force for the waterproof rubber plug 70 can be reduced to be smaller.

Easiness to set parting lines using the recesses of the undulated surface 78 and nondamageability due to the short height of the undulation even if an undercut or overhanging portion is formed because of the undulated surface 78 hold similar to the dummy plug 20 shown in the first preferred embodiment.

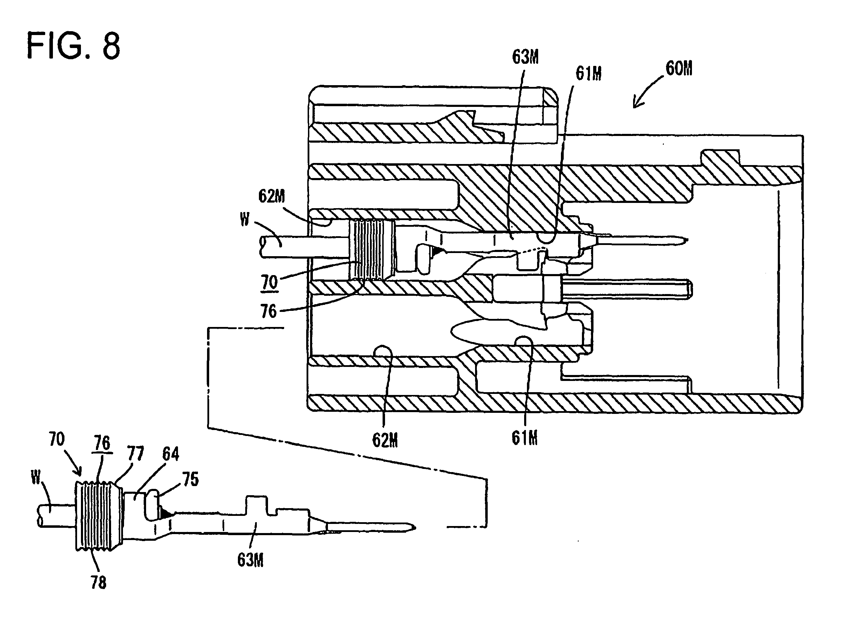

As shown in FIG. 8, the waterproof rubber plug 70 is also used by being secured to an end of a wire W together with and behind a male terminal 63M and is inserted into an entrance 62M of a cavity 61M to seal the cavity 61M as the male terminal 63M is inserted into the cavity 61M formed in a male housing 60M. The same functions and effects as in the case of being used in the female side can be obtained.

### <Fourth Embodiment>

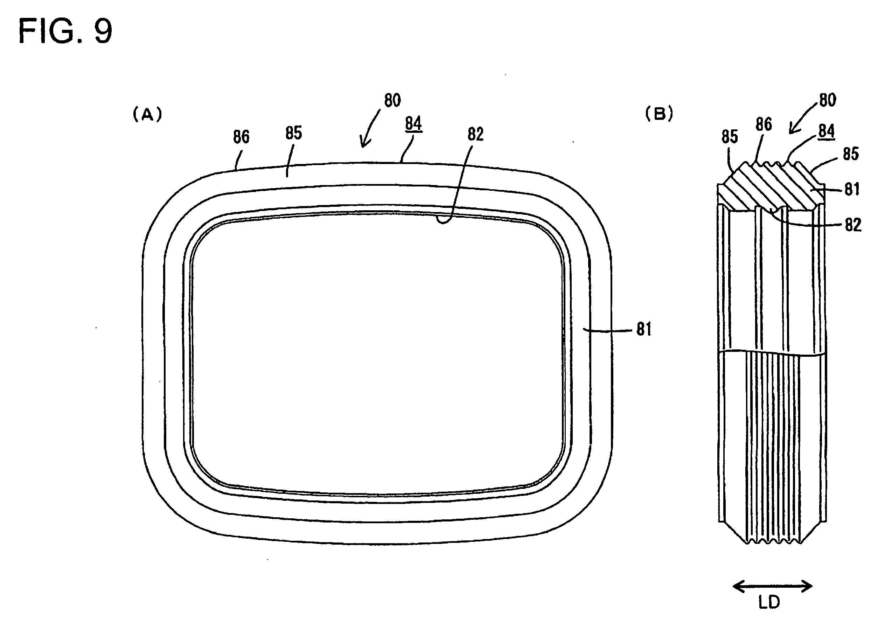

FIGS. 9 to 11 show a fourth preferred embodiment of the present invention. The present invention is applied to a packing 80 for providing sealing between a female and a male housings 60F, 60M in the fourth embodiment. It should be noted that neither female nor male terminal fittings are shown in the fourth embodiment. Moreover, the packing 80 preferably is substantially rotationally symmetric about its longitudinal axis.

The packing 80 is fitted on or to the outer circumferential surface of a tower portion 65 (as a preferred female-side housing portion) formed with one or more cavities 61F of the female housing 60F, and is squeezed between the outer circumferential surface of the tower portion 65 and the inner circumferential surface (as a preferred male-side housing portion) of a receptacle 66 of the mating male housing 60M.

The packing 80 is made of a resilient (preferably rubber) material such as an oil-impregnated silicone and, as shown in FIG. 9(A), includes a ring-shaped packing main body 81 whose front view is substantially in the form of a laterally long rectangle, and is symmetrically shaped along longitudinal direction LD. An inner lip 82 is suitably formed on the inner circumferential surface of the packing main body 81.

Here, a wide single lip or lip portion 84 is formed on the outer circumferential surface of the packing main body 81, and inclined surfaces 85 having a moderate downward or inward inclination (preferably of less than about 30°, preferably of less than about 20°, most preferably about 15° to the longitudinal direction LD) are formed at the opposite sides. The wide lip portion 84 preferably has a longitudinal extension of more than about 1/4, preferably of more than about 1/3, most preferably more than about half of the longitudinal extension of the packing main body 81. An undulated surface 86 having a short height or projecting distance is formed in the top or outer surface of the lip 84.

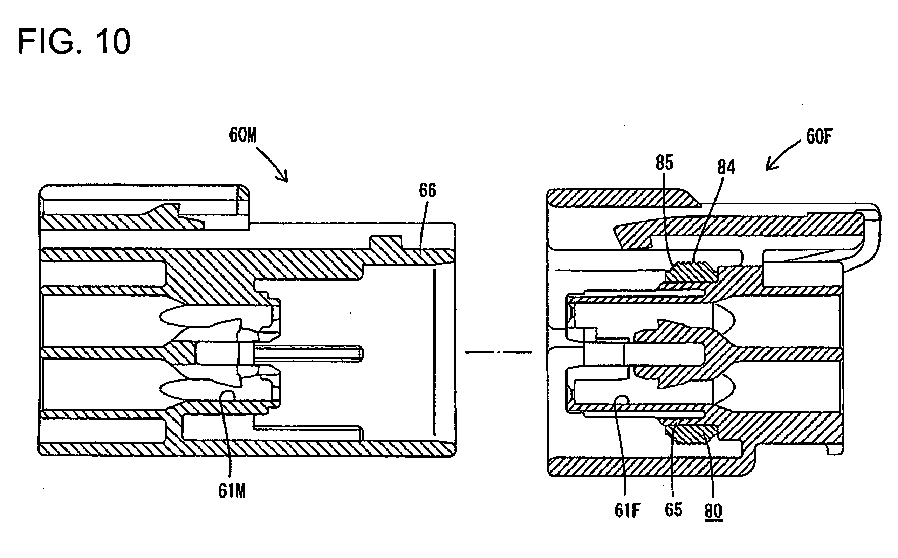

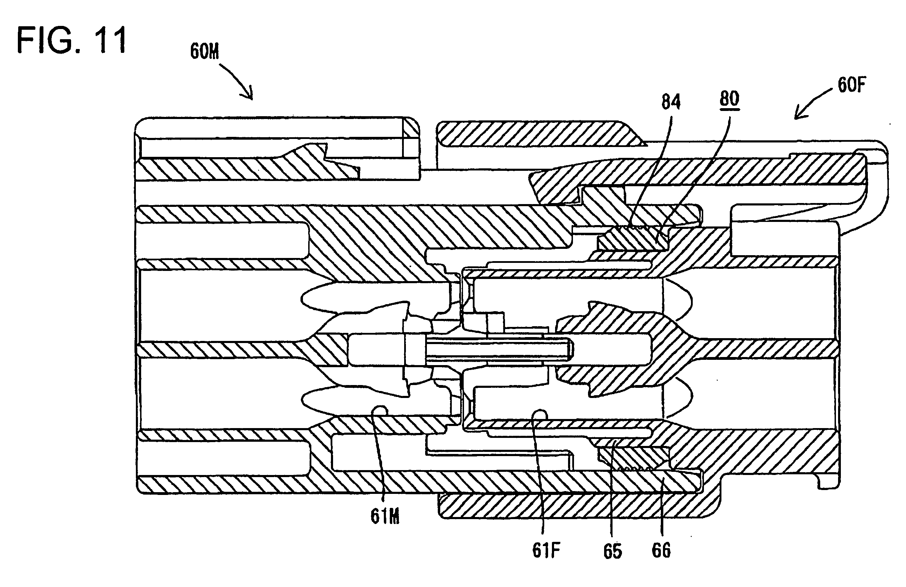

As shown in FIG. 10, such a packing 80 is or is to be mounted on the outer circumferential surface preferably of the tower portion 65 of the female housing 60F and the female and male housings 60F, 60M are connected in such a state. When a final stage of the connecting operation comes, the packing 80 is at least partly inserted into a space defined by the inner circumferential surface of the projecting end of the receptacle 66 of the male housing 60M. The packing 80 is centered by being guided by the inclined surface 85 at the front side with respect to an inserting direction coming into contact with the opening edge of the projecting end of the receptacle 66, and is at least partly inserted into the receptacle 66 while the top or outer surface of the single lip 84 preferably is uniformly resiliently compressed over the substantially entire circumference. When the two housings 60F, 60M are properly connected as shown in FIG. 11, the packing 80 is resiliently squeezed preferably over the substantially entire circumference between the inner circumferential surface of the receptacle 66 and the outer circumferential surface of the tower portion 65, thereby providing sealing between the two housings 60F, 60M.

Since the packing 80 of this embodiment is also formed with only one lip or lip portion 84 having the wide top or radially outer surface, a resiliently compressed volume is larger and a larger sealing force can be obtained. Further, upon at least partly inserting the packing 80 into the receptacle 66, the packing 80 is inserted with the top or outer surface of the lip 84 uniformly resiliently compressed preferably over the substantially entire circumference after being centered by the inclined surface 85. Further, the fine undulated surface 86 is formed in the top or outer surface of the lip 84 to reduce a contact area between the top surface of the lip 84 and the inner circumferential surface of the receptacle 66, thereby decreasing a frictional resistance. Thus, an inserting force for the packing 80 can be suppressed to be smaller and, in its turn, a connecting force for the female and male housings 60F, 60M can be suppressed to be smaller.

Easiness to set parting lines using the recesses of the undulated surface 86 and nondamageability due to the short height of the undulation even if an undercut or overhanging shape is formed because of the undulated surface 86 hold similar to the dummy plug 20 described above.

Further, since the inclined surfaces 85 of the lip 84 preferably are substantially symmetrically formed at the front and rear sides, the packing 80 can be inserted into the mating receptacle 66 with a smaller force by the function of the inclined surface 85 and, in its turn, the female and male housings 60F, 60M can be connected with a smaller force regardless of whether the front or rear side of the packing 80 is first mounted on the outer circumferential surface of the tower portion 65. In other words, the packing 80 can be mounted on the tower portion 65 irrespective of the orientation thereof, thereby improving operability.

### <Fifth Embodiment>

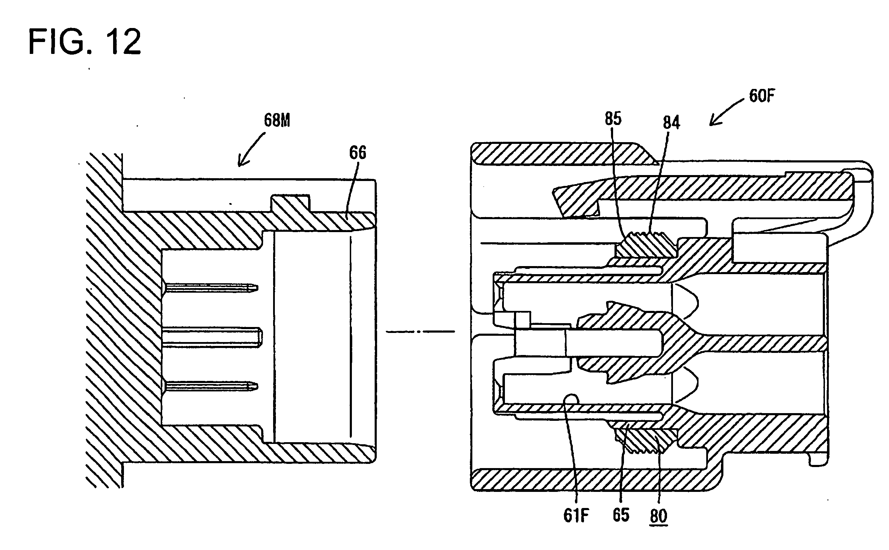

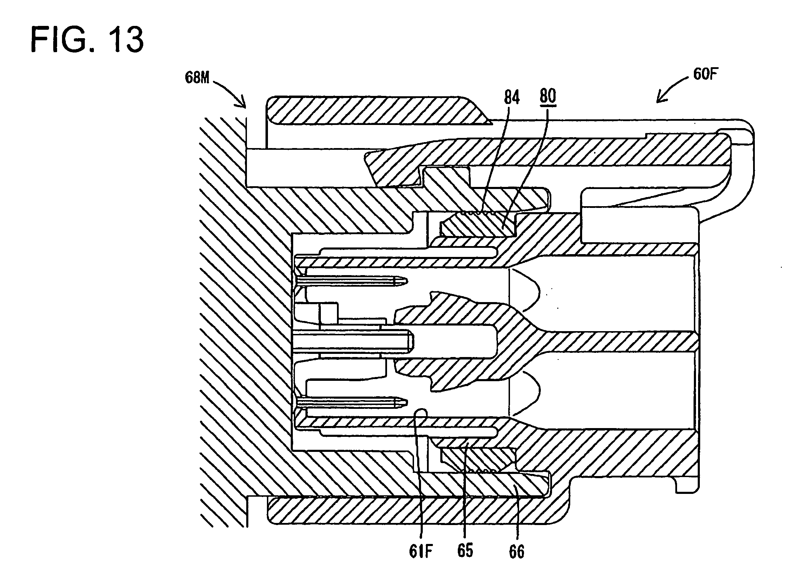

The packing 80 shown in the fourth embodiment is similarly applicable even in the case where the male housing 68M is directly provided on a side surface of an apparatus as shown in FIGS. 12 and 13 instead of being provided at an end of a wiring harness, i.e. the male housing 60M is of the type directly connected with the apparatus such as a junction box. Even in such a case, similar functions and effects can be obtained.

### <Other Embodiments>

The present invention is not limited to the above described and illustrated embodiments. For example, the following embodiments are also embraced by the technical scope of the present invention as defined by the claims. Beside the following embodiments, various changes can be made without departing from the scope of the present invention as defined by the claims.
(1) The parting lines of the mold may be set at positions corresponding to intermediate positions of oblique surfaces extending from the projections toward the recesses of the undulated surface instead of being set at or near positions completely corresponding to the bottom of the undulated surface.
(2) Even for the dummy plug and the packing, it is not always necessary to provide the inclined surface at each of the front and rear sides of the lip. In the case of the dummy plug, it is sufficient to provide the inclined surface at least at the front side with respect to the inserting direction if the inserting orientation of the dummy plug into the cavity is determined. Further, in the case of the packing, it is sufficient to provide the inclined surface at least at the side facing the receptacle if which end is to be opposed to the receptacle is determined.
(3) The top or outer or radially outermost surface of the lip may be a substantially planar surface without being formed with the undulated surface. Even with such a construction, there can be obtained effects of larger sealing forces in the cavity and the receptacle and smooth insertion into the cavity and the receptacle. Thus, the planar top surface is also embraced by the technical scope of the present invention.

### LIST OF REFERENCE NUMERALS

- 10: connector housing
- 11: cavity (recessed portion)
- 12: entrance
- 20, 50: dummy plug (sealing member)
- 21, 51: plug main body (sealing-member main body)
- 25, 25A: lip
- 26, 26A: top surface
- 27: inclined surface
- 30, 30A: undulated surface
- 31: undulation
- W: wire
- 60F: female housing
- 60M: male housing
- 61F, 61M: cavity (recessed portion)
- 62F, 62M: entrance
- 63F: female terminal
- 63M: male terminal
- 65: tower portion (projecting part)
- 66: receptacle (recessed part)
- 68M: male housing
- 70: waterproof rubber plug (sealing member)
- 71: plug main body (sealing-member main body)
- 76: lip
- 77: inclined surface
- 78: undulated surface
- 80: packing (sealing member)
- 81: packing main body (sealing-member main body)
- 84: lip
- 85: inclined surface
- 86: undulated surface

## Claims

1. A sealing member (20; 50; 70; 80) made of a resilient material and used to hermetically seal a recessed portion (11; 61F, 61M; 66) formed in a housing (10; 60F, 60M; 68M) of a watertight connector by being at least partly inserted into the recessed portion (11; 61F, 61M; 66), wherein:
a single lip portion (25; 25A; 76; 84) which has a wide outer surface (26; 26A) and can be brought into close contact with the inner circumferential surface of the recessed portion (11; 61F, 61M; 66) is formed on the outer circumferential surface of a sealing-member main body (21; 51; 71; 81);
**characterized in that**
a side surface of the lip portion (25; 25A; 76; 84) at front side with respect to an inserting direction (ID) into the recessed portion (11; 61F, 61M; 66) is formed into an inclined surface (27; 77; 85) having a moderate inclination of less than 30°, preferably of less than 20°;
an outer diameter (D) of the outer surface (26) of the lip (25; 25A; 76; 84) is set to be larger than an inner diameter (d) of an entrance (12) of the recessed portion (11; 61F, 61M; 66) by a specified distance; and
the outer surface (26; 26A) of the lip portion (25; 25A; 76; 84) has an undulated surface (30; 30A; 78; 86) in which projections (31) and recesses (32) having a height smaller than the height of the lip portion (25; 25A; 76; 84) alternately repeat substantially along longitudinal direction (LD).

2. A sealing member according to claim 1, wherein the sealing member is a dummy plug (20; 50) used to hermetically seal a cavity (11) formed in the housing (10) and preferably having no terminal fitting accommodated therein by being at least partly inserted into the cavity (11).

3. A sealing member according to claim 1, wherein the sealing member is a waterproof resilient plug (70) used to seal an entrance side of a cavity (61F) formed in the housing (60F) by being secured to an end of a wire (W) together with a terminal fitting (63F) and at least partly inserted into the cavity (61F).

4. A sealing member according to claim 1, wherein the sealing member is a packing (80) used to provide hermetic sealing between a pair of housings (60F; 60M) connectable by the engagement of a projecting or inner part (65) and a recessed part (66) by being mounted on or to the outer circumferential surface of the projecting or inner part (65) and being resiliently squeezed between the outer circumferential surface of the projecting or inner part (65) and the inner circumferential surface of the mating recessed part (66).

5. A sealing member according to one or more of the preceding claims, wherein the lip portion (25; 25A; 76; 84)is symmetrically formed by having side surfaces thereof at front and rear sides formed into inclined surfaces (27; 77; 85) having a moderate inclination.

6. A sealing member according to one or more of the preceding claims, wherein the lip portion (25; 25A; 76; 84) extends over more than about half, preferably over more than about 2/3 the longitudinal extension of the sealing member.

7. A sealing member according to one or more of the preceding claims, wherein the sealing member is substantially rotationally symmetric about its longitudinal axis.

8. A method of molding a sealing member (20; 50; 70; 80) made of a resilient material, the method comprising the following steps:
providing a fixed mold (41) having a fixed portion (42) and an intermediate plate (43);
providing a movable mold (44);
wherein the molds (41; 44) are formed such as to form the sealing member (20; 50; 70; 80) with a single lip portion (25; 25A; 76; 84) which has a wide outer surface (26; 26A) and which is formed on the outer circumferential surface of a sealing-member main body (21; 51; 71; 81),
providing a first parting line (PL1) between the movable mold (44) and the intermediate plate (43) at a position of a recess (32A) at or towards one end of the undulated surface (30);
providing a second parting line (PL2) between the fixed portion (42) and the intermediate plate (43) at a position of a recess (32B) at or towards an opposite side of the undulated surface (30); and
filling molding material into the mold.

## Patentansprüche

1. Dichtelement bzw. -glied (20; 50; 70; 80), welches aus einem rückstellfähigen Material hergestellt ist und verwendet ist, um hermetisch einen abgesetzten bzw. vertieften Abschnitt (11; 61F, 61M; 66) abzudichten, welcher in einem Gehäuse (10; 60F, 60M; 68M) eines wasserdichten Verbinders ausgebildet ist, indem es wenigstens teilweise in den vertieften Abschnitt (11; 61F, 61M; 66) eingesetzt ist, wobei:
ein einzelner Lippenabschnitt (25; 25A; 76; 84), welcher eine breitere Außenoberfläche (26; 26A) aufweist und in unmittelbaren Kontakt mit der inneren Umfangsoberfläche des vertieften Abschnitts (11; 61F, 61M; 66) gebracht werden kann, an der äußeren Umfangsoberfläche eines Dichtelement-Hauptkörpers (21; 51; 71; 81) ausgebildet ist;
**dadurch gekennzeichnet, daß**
eine Seitenoberfläche des Lippenabschnitts (25; 25A; 76; 84) an einer vorderen Seite in Bezug auf eine Einsetzrichtung (ID) in den vertieften Abschnitt (11; 61F, 61M; 66) in eine geneigte Oberfläche (27; 77; 85) ausgebildet ist, welche eine moderate bzw. geringe Neigung von weniger als 30°, vorzugsweise von weniger als 20° aufweist;
ein Außendurchmesser (D) der äußeren Oberfläche (26) der Lippe (25; 25A; 76; 84) eingestellt bzw. festgelegt ist, um größer als ein Innendurchmesser (d) eines Eintritts (12) des vertieften Abschnitts (11; 61F, 61M; 66) um einen bestimmten Abstand zu sein; und
die äußere Oberfläche (26; 26A) des Lippenabschnitts (25; 25A; 76; 84) eine gewellte Oberfläche (30; 30A; 78; 86) aufweist, in welcher Vorsprünge bzw. Erhebungen (31) und Vertiefungen bzw. Aussparungen (32), welche eine Höhe geringer als die Höhe des Lippenabschnitts (25; 25A; 76; 84) aufweisen, sich abwechselnd im wesentlichen entlang einer Längsrichtung (LD) wiederholen.

2. Dichtelement nach Anspruch 1, wobei das Dichtelement ein Blind- bzw. Dummystopfen (20; 50) ist, welcher verwendet ist bzw. wird, um hermetisch einen Hohlraum (11) abzudichten, welcher in dem Gehäuse (10) ausgebildet ist, und vorzugsweise kein Anschlußpaßstück darin aufgenommen aufweist, indem er wenigstens teilweise in den Hohlraum (11) eingesetzt ist.

3. Dichtelement nach Anspruch 1, wobei das Dichtelement ein wasserdichter rückstellfähiger Stopfen (70) ist, welcher verwendet ist, um eine Eintrittsseite eines Hohlraums (61F) abzudichten, welcher in dem Gehäuse (60F) ausgebildet ist, indem er an einem Ende eines Drahts (W) gemeinsam mit einem Anschlußpaßstück (63F) gesichert und wenigstens teilweise in den Hohlraum (61F) eingesetzt ist bzw. wird.

4. Dichtelement nach Anspruch 1, wobei das Dichtelement eine Packung bzw. Dichtung (80) ist, die verwendet wird, um eine hermetische Abdichtung zwischen einem Paar von Gehäusen (60F; 60M) zur Verfügung zu stellen, welche durch den Eingriff eines vorragenden oder inneren Teils (65) und eines vertieften bzw. abgesetzten Teils (66) verbindbar sind, indem sie an oder bei der äußeren Umfangsoberfläche des vorragenden oder inneren Teils (65) montiert bzw. angeordnet ist und rückstellfähig zwischen der äußeren Umfangsoberfläche des vorragenden oder inneren Teils (65) und der inneren Umfangsoberfläche des zusammenpassenden bzw. abgestimmten vertieften Teils (66) gequetscht bzw. geklemmt ist.

5. Dichtelement nach einem oder mehreren der vorangehenden Ansprüche, wobei der Lippenabschnitt (25; 25A; 76; 84) symmetrisch ausgebildet ist, indem er Seitenoberflächen davon an vorderen und rückwärtigen Seiten in geneigte Oberflächen (27; 77; 85) ausgebildet aufweist, welche eine moderate bzw. geringe Neigung aufweisen.

6. Dichtelement nach einem oder mehreren der vorangehenden Ansprüche, wobei sich der Lippenabschnitt (25; 25A; 76; 84) über mehr als etwa eine Hälfte, vorzugsweise über mehr als etwa 2/3 der Längserstreckung des Dichtelements erstreckt.

7. Dichtelement nach einem oder mehreren der vorangehenden Ansprüche, wobei das Dichtelement im wesentlichen rotationssymmetrisch um seine Längsachse ist.

8. Verfahren zum Formen eines Dichtelements bzw. -glieds (20; 50; 70; 80), welches aus einem rückstellfähigen Material hergestellt wird, wobei das Verfahren die folgenden Schritte umfaßt:
Bereitstellen einer festgelegten Form (41), welche einen festgelegten bzw. fixierten Abschnitt (42) und eine zwischenliegende Platte (43) aufweist;
Bereitstellen einer bewegbaren Form (44);
wobei die Formen (41; 44) derart ausgebildet werden, daß sie das Dichtelement (20; 50; 70; 80) mit einem einzelnen Lippenabschnitt (25; 25A; 76; 84) ausbilden, welcher eine breitere Außenoberfläche (26; 26A) aufweist und welcher an der äußeren Umfangsoberfläche eines Dichtelement-Hauptkörpers (21; 51; 71; 81) ausgebildet wird,
Bereitstellen einer ersten Trennlinie (PL1) zwischen der bewegbaren Form (44) und der zwischenliegenden Platte (43) an einer Position einer Vertiefung bzw. Aussparung (32A) an oder in Richtung zu einem Ende der gewellten Oberfläche (30);
Bereitstellen einer zweiten Trennlinie (PL2) zwischen dem festgelegten Abschnitt (42) und der zwischenliegenden Platte (43) an einer Position einer Vertiefung bzw. Aussparung (32B) an oder in Richtung zu einer gegenüberliegenden Seite der gewellten Oberfläche (30); und
Füllen von Formmaterial in die Form.

## Revendications

1. Elément d'étanchéité (20 ; 50 ; 70 ; 80) fabriqué en une matière élastique et utilisé pour fermer hermétiquement une partie évidée (11 ; 61F, 61M ; 66) formée dans un corps (10 ; 60F, 60M ; 68M) d'un connecteur étanche, par insertion au moins partielle dans la partie évidée (11 ; 61F, 61M ; 66), dans lequel :
une partie de lèvre unique (25 ; 25A ; 76 ; 84) qui présente une surface extérieure large (26 ; 26A) et peut être amenée en contact serré avec la surface circonférentielle intérieure de la partie évidée (11 ; 61F, 61M ; 66) est formée sur la surface circonférentielle extérieure d'un corps principal de l'élément d'étanchéité (21 ; 51 ; 71 ; 81);
**caractérisé en ce que**
une surface latérale de la partie de lèvre (25 ; 25A ; 76; 84) du côté avant avec référence à une direction d'insertion (ID) dans la partie évidée (11 ; 61F, 61M; 66) est sous la forme d'une surface inclinée (27 ; 77 ; 85) ayant une inclinaison modérée inférieure à 30 degrés et de préférence inférieure à 20 degrés ;
un diamètre extérieur (D) de la surface extérieure (26) de la lèvre (25 ; 25A ; 76 ; 84) est choisi plus grand qu'un diamètre intérieur (d) d'une entrée (12) de la partie évidée (11 ; 61F, 61 M ; 66), d'une distance spécifiée ; et
la surface extérieure (26 ; 26A) de la partie de lèvre (25; 25A ; 76 ; 84) présente une surface ondulée (30 ; 30A ; 78 ; 86) dans laquelle des saillies (31) et des creux (32) ayant une hauteur inférieure à la hauteur de la partie de lèvre (25 ; 25A ; 76 ; 84) se répètent alternativement sensiblement le long de la direction longitudinale (LD).

2. Elément d'étanchéité selon la revendication 1, dans lequel l'élément d'étanchéité est un bouchon mort (20 ; 50) utilisé pour fermer hermétiquement une cavité (11), formée dans le corps (10) et n'ayant de préférence pas d'armature de borne logée à l'intérieur, par insertion au moins partielle dans la cavité (11).

3. Elément d'étanchéité selon la revendication 1, dans lequel l'élément d'étanchéité est un bouchon élastique étanche (70), utilisé pour fermer un côté d'entrée d'une cavité (61F) formée dans le corps (60F) par fixation à une extrémité d'un fil (W) en même temps qu'une armature de borne (63F) et insertion au moins partielle du dit bouchon dans la cavité (61F).

4. Elément d'étanchéité selon la revendication 1, dans lequel l'élément d'étanchéité est une garniture (80) utilisée pour créer une étanchéité hermétique entre deux corps (60F ; 60M), connectables par l'accouplement d'une partie en saillie ou intérieure (65) et d'une partie femelle (66), par montage de la dite garniture sur ou à la surface circonférentielle extérieure de la partie en saillie ou intérieure (65) et compression élastique entre la surface circonférentielle extérieure de la partie en saillie ou intérieure (665) et la surface circonférentielle intérieure de la partie femelle coopérante (66).

5. Elément d'étanchéité selon une ou plusieurs des revendications précédentes, dans lequel la partie de lèvre (25 ; 25A ; 76 ; 84) est formée symétriquement en ce que ses surfaces latérales à l'avant et à l'arrière sont sous la forme de surfaces inclinées (27 ; 77 ; 85) ayant une inclinaison modérée.

6. Elément d'étanchéité selon une ou plusieurs des revendications précédentes, dans lequel la partie de lèvre (25 ; 25A ; 76 ; 84) s'étend sur plus de la moitié environ et de préférence sur plus des deux tiers environ de l'extension longitudinale de l'élément d'étanchéité.

7. Elément d'étanchéité selon une ou plusieurs des revendications précédentes, dans lequel l'élément d'étanchéité est sensiblement symétrique en rotation autour de son axe longitudinal.

8. Procédé de moulage d'un élément d'étanchéité (20 ; 50 ; 70 ; 80) en matière élastique, le procédé comprenant les étapes suivantes :
préparation d'un moule fixe (41) ayant une partie fixe (42) et une plaque intermédiaire (43) ;
préparation d'un moule mobile (44) ;
dans lequel les moules (41 ; 44) sont formés de manière à produire l'élément d'étanchéité (20 ; 50 ; 70 ; 80) ayant une partie de lèvre unique (25 ; 25A ; 76 ; 84) qui a une large surface extérieure (26 ; 26A) et qui est formée sur la surface circonférentielle extérieure d'un corps principal de l'élément d'étanchéité (21 ; 51 ; 71 ; 81) ;
création d'une première ligne de partage (PL1) entre le moule mobile (44) et la plaque intermédiaire (43) à une position d'un évidement (32A) à ou vers une extrémité de la surface ondulée (30) :
création d'une deuxième ligne de partage (PL2) entre la partie fixe (42) et la plaque intermédiaire (43) à une position d'un évidement (32B) à ou vers un côté opposé de la surface ondulée (30) ; et
remplissage du moule avec une matière de moulage.
